# EUROPÄISCHE PATENTSCHRIFT

(11) **EP 4 372 331 B1**
(45) Veröffentlichungstag und Bekanntmachung des Hinweises auf die Patenterteilung: **01.01.2025**
(21) Anmeldenummer: 22208242.2
(22) Anmeldetag: 18.11.2022
(51) Int. Cl.: G01F 25/10, G01F 1/72, G01F 25/17

(54) **PRÜF- UND/ODER KALIBRIERAUFBAU FÜR DURCHFLUSSMESSER UND VERFAHREN ZUR PRÜFUNG UND/ODER KALIBRIERUNG VON DURCHFLUSSMESSERN**
TEST AND/OR CALIBRATION STRUCTURE FOR FLOW METERS AND METHOD FOR TESTING AND/OR CALIBRATING FLOW METERS
ENSEMBLE DE TEST ET/OU D'ÉTALONNAGE POUR DÉBITMÈTRES ET PROCÉDÉ DE TEST ET/OU D'ÉTALONNAGE DE DÉBITMÈTRES

(43) Veröffentlichungstag der Anmeldung: 22.05.2024
(73) Patentinhaber: SICK Engineering GmbH, 01458 Ottendorf-Okrilla (DE)
(72) Erfinder: Seilmayer, Martin, Grußharthau (DE); Künzelmann, Mario, Dresden (DE)
(74) Vertreter: Manitz Finsterwald Patent- und Rechtsanwaltspartnerschaft mbB

(56) Entgegenhaltungen:
- CN-A- 114 414 008
- DE-A1- 102014 211 961
- FR-A1- 2 596 151
- US-A- 3 177 699

## Beschreibung

Die vorliegende Erfindung betrifft einen Prüf- und/oder Kalibrieraufbau für Durchflussmesser, insbesondere für Ultraschall-Durchflussmesser sowie ein entsprechendes Verfahren zur Prüfung und/oder Kalibrierung solcher Durchflussmesser.

Zugelassene Durchflussmesser werden mithilfe eines geeigneten Prüfstandes, mit hinreichender Präzision, für den jeweiligen Einsatzzweck (z. B. zur Abrechnung) qualifiziert und/oder kalibriert. Dabei muss der Prüfstand die jeweilige Nennweite und vorgesehenen Durchflüsse für den entsprechenden Durchflussmesser (konkret des "Meter-Under-Test" (MUT)) bereitstellen. Prüfstände mit Genauigkeiten von <0.1 % für große Nennweiten (>DN500) existieren kaum.

Es gibt verschiedene Strategien einen Durchflussmesser zu qualifizieren. Zum einen existiert die volumetrische Qualifizierung, für welche der tatsächliche Durchfluss über ein bekanntes Referenzvolumen durch das MUT bestimmt wird. Alternativ dazu gibt es die gravimetrische Qualifizierung, für welche der tatsächliche Durchfluss mittels einer Waage für eine Referenzmenge und über die Dichte des Fluids bestimmt wird. Die dritte Qualifizierungsvariante ist die "Master-Meter-Method", für welche der tatsächliche Durchfluss über einen hinreichend genauen Referenzzähler bestimmt wird.

Dabei ist festzustellen, dass alle bekannten Prüfverfahren im stationären Betrieb bzw. im Einzeldurchlauf messen. Der stationäre Betrieb ermöglicht dabei keine Untersuchung des Frequenzganges des Durchflusses. Ferner steht man vor der Herausforderung der Langzeitstabilität der zu vermessenden Referenzströmung. Versuche bei niedrigen Durchflüssen können im Zeitbereich von Stunden durchgeführt werden, dies gilt jedoch gegenwärtig noch nicht für Messungen bei hohen Durchflüssen. Konkret wird im Einzeldurchlauf immer ein spezifischer Volumenstrom erzeugt und lediglich im Bereich eines Ziel-Durchflusses ausgewertet. Dabei steht durch den gewählten Prüfaufbau nur ein ganz begrenztes Volumen an Fluid zur Verfügung, welches von einem Ausgangsreservoir durch den Durchflussmesser in ein Auffangreservoir bewegt wird. Dies führt dazu, dass insbesondere bei großen Nennweiten (>DN500) nur vergleichsweise geringe oder zeitlich begrenzte Volumenströme vermessen werden können.

Es ist daher eine der Erfindung zugrundeliegende Aufgabe, einen Prüf- und/oder Kalibrieraufbau sowie ein entsprechendes Verfahren zur Prüfung und/oder Kalibrierung bereitzustellen, mittels welchem auch Durchflussmesser für vergleichsweise große Nennweiten zuverlässig und genau geprüft und/oder kalibriert werden können.

Diese Aufgabe wird durch einen Prüf- und/oder Kalibrieraufbau gemäß Anspruch 1 sowie ein Verfahren gemäß Anspruch 14 gelöst. Vorteilhafte Weiterbildungen der Erfindung sind den abhängigen Ansprüchen zu entnehmen.

Beispielhafte Ausgestaltungen bekannter Aufbauten entsprechend dem Oberbegriff des Anspruchs 1 sind der DE 10 2014 211 961 A1, der FR 2 596 151 A1, der US 3 177 699 A sowie der CN 114 414 008 A zu entnehmen.

Demgemäß umfasst ein erfindungsgemäßer Prüf- und/oder Kalibrieraufbau für Durchflussmesser, insbesondere für Ultraschall-Durchflussmesser, eine U-Rohr-Anordnung mit zwei zumindest anteilig vertikalen Rohrabschnitten und einem zumindest anteilig horizontalen Rohrabschnitt, welcher die beiden vertikalen Rohrabschnitte insbesondere in ihrem unteren Bereich, miteinander verbindet, sowie ein Fluid, welches den zumindest anteilig horizontalen Rohrabschnitt ausfüllt und in die beiden zumindest anteilig vertikalen Rohrabschnitte hinaufragt, um dort Fluidsäulen zu bilden. Ferner umfasst der erfindungsgemäße Prüf- und/oder Kalibrieraufbau eine Antriebseinheit, welche dazu ausgebildet ist, das Fluid entlang der U-Rohr-Anordnung zu bewegen, sodass es zu einem Volumenstrom von Fluid durch den zumindest anteilig horizontalen Rohrabschnitt und gleichzeitig zu einer (gegenläufigen) Variation der Höhe der beiden Fluidsäulen in den beiden zumindest anteilig vertikalen Rohrabschnitten kommt. Schließlich umfasst der erfindungsgemäße Prüf- und/oder Kalibrieraufbau auch eine Steuer- und Auswerteinheit, welche dazu ausgebildet ist, die Antriebseinheit zu steuern und das Verhalten des Fluids zu überwachen, um daraus einen tatsächlich erzeugten Durchfluss durch den horizontalen Rohrabschnitt zu ermitteln. Dabei weist der zumindest anteilig horizontale Rohrabschnitt einen Prüf- und/oder Kalibrierbereich auf, in welchem der zu prüfende und/oder kalibrierende Durchflussmesser vorgesehen werden kann, um einen Durchfluss durch den zumindest anteilig horizontalen Rohrabschnitt zu messen. Die Steuer- und Auswerteinheit ist mit dem jeweils zu prüfenden und/oder kalibrierenden Durchflussmesser koppelbar und dazu ausgebildet, den von dem Durchflussmesser gemessenen Durchfluss mit dem tatsächlich erzeugten Durchfluss zu vergleichen und ein entsprechendes Ergebnis auszugeben und/oder den Durchflussmesser anhand des tatsächlich erzeugten Durchflusses, insbesondere automatisch, zu kalibrieren. Die Antriebseinheit und die Steuer- und Auswerteinheit sind dazu ausgebildet, eine oszillierende, insbesondere eine harmonisch oszillierende, Variation der Höhe der Fluidsäulen in den beiden zumindest anteilig vertikalen Rohrabschnitten und damit einen entsprechend oszillierenden Durchfluss durch den zumindest anteilig horizontalen Rohrabschnitt zu bewirken.

Die Formulierungen "zumindest anteilig horizontaler Rohrabschnitt" ist dabei effektiv derart zu verstehen, dass der besagte Rohrabschnitt zumindest nicht rein vertikal verläuft, während die Formulierung "zumindest anteilig vertikale Rohrabschnitte" effektiv derart zu verstehen ist, dass die besagten Rohrabschnitte zumindest nicht rein horizontal verlaufen. Mit anderen Worten weist die Ausrichtung des zumindest anteilig horizontalen Rohrabschnitts zumindest einen horizontalen Anteil auf, während die Ausrichtung der zumindest anteilig vertikalen Rohrabschnitte zumindest einen vertikalen Anteil aufweist. Erfindungsgemäß ist eine U-Rohr-Anordnung mit einem überwiegend (bevorzugt tatsächlich) horizontalen Rohrabschnitt und zwei einander gegenüberliegenden überwiegend (bevorzugt tatsächlich) vertikalen Rohrabschnitten bevorzugt. Es ist jedoch auch möglich, die beiden zumindest anteilig vertikalen Rohrabschnitte jeweils um einen bestimmten Winkel aus der Vertikalen heraus zu neigen (da dann auch eine Komponente des Rohrs - also ein Rohrabschnitt - in vertikaler Richtung verläuft). Auch kann der zumindest anteilig horizontale Rohrabschnitt lediglich den Prüf- und/oder Kalibrierbereich für den Durchflussmesser umfassen. Damit ist im Sinne der vorliegenden Erfindung beispielsweise auch eine Ausgestaltung in Form eines V mit einem horizontalen Prüf- und/oder Kalibrierbereich in der unteren Spitze des V eine anspruchsgemäße U-Rohr-Anordnung. Es versteht sich, dass die vertikalen Rohrabschnitte und der horizontale Rohrabschnitt durch beliebige Formen (Zwischenstücke) miteinander verbunden werden können, solange ein Fluidstrom zwischen den vertikalen Rohrabschnitten und dem horizontalen Rohrabschnitt möglich ist.

Diese Ausgestaltung weist gleich mehrere Vorteile auf. Durch die gebildete, insbesondere symmetrische, U-Rohr-Anordnung kann auf einfache Art und Weise ein oszillierender Durchfluss durch den Durchflussmesser erzeugt werden, zu dessen Aufrechterhaltung die jeweilige potentielle Energie der Fluidsäulen in den zumindest anteilig vertikalen Rohrabschnitten ausgenutzt werden kann. Einmal durch die Antriebseinheit in Bewegung gebracht, "schwappt" das Fluid, insbesondere mit einem gedämpft sinusförmigen Bewegungsprofil, in der U-Rohr-Anordnung immer wieder hin und her. Durch den energiesparsamen wiederholbaren Richtungswechsel der Durchflussrichtung ist eine einfache und effiziente Mehrfachmessung mit dem Durchflussmesser möglich. Damit ist eine im Vergleich zu den oben beschriebenen Einzeldurchlauf-Messung eine genauere und zuverlässigere Prüfung und/oder Kalibrierung des jeweiligen Durchflussmessers möglich. Dabei ermöglicht die zumindest anteilig vertikale Ausrichtung der seitlichen Rohrabschnitte einen in der notwendigen Stellfläche einer solchen Prüfvorrichtung platzsparenden Aufbau, welcher sich im Wesentlichen in die Höhe erstreckt. Durch eine Variation des zumindest anteilig horizontalen Rohrabschnitts können dabei die Nennweite, die Durchflüsse sowie die Frequenzen des Fluids beim Durchlaufen des zumindest anteilig horizontalen Rohrabschnitts sehr einfach und frei variiert werden, ohne den restlichen Prüf- und/oder Kalibrieraufbau modifizieren zu müssen.

Entsprechend der vorliegenden Erfindung sind dabei die Antriebseinheit und die Steuer- und Auswerteinheit dazu ausgebildet, eine oszillierende, insbesondere eine harmonisch oszillierende, Variation der Höhe der Fluidsäulen in den beiden vertikalen Rohrabschnitten und einen entsprechend oszillierenden Durchfluss durch den zumindest anteilig horizontalen Rohrabschnitt zu bewirken.

Die besagte Variation der Höhe der Fluidsäule in den beiden zumindest anteilig vertikalen Rohrabschnitten ist aufgrund deren Verbindung über den zumindest anteilig horizontalen Rohrabschnitt durch die aktive Variation der Höhe der Fluidsäule nur einer der beiden zumindest anteilig vertikalen Rohrabschnitte möglich. Dies wiederum kann beispielsweise sehr einfach und zuverlässig durch einen mechanisch angetriebenen Kolben in einem der beiden zumindest anteilig vertikalen Rohrabschnitten erfolgen. Alternativ dazu wären auch hydraulische oder pneumatische Ausgestaltungen denkbar. Um eine besonders zielsichere und genaue Steuerung der Höhe der Fluidsäulen in den beiden zumindest anteilig vertikalen Rohrabschnitten zu ermöglichen, können natürlich beide zumindest anteilig vertikalen Rohrabschnitte über einen entsprechende Variationsvorrichtung verfügen, welche dann zusammen die anspruchsgemäße Antriebseinheit bilden. Durch die oszillierende Variation sind auf einfache Art und Weise mehrere Messdurchläufe möglich, was eine deutliche Verbesserung der Messgenauigkeit des Aufbaus ermöglicht. Eine harmonisch oszillierende Variation ist dabei besonders energieeffizient.

Bevorzugt, ist die Steuer- und Auswerteinheit dazu ausgebildet, das Verhalten des Fluids über wenigstens eine halbe Hub-Periode, insbesondere über mehrere - bevorzugt aufeinander folgende - Hub-Perioden, hinweg zu überwachen und auszuwerten.

Konkret bedeutet dies, dass im Gegensatz zum gegenwärtigen Stand der Technik, auch während der Aufbau- und Abklingphase des erzeugten Durchflusses das tatsächliche Verhalten des Fluids und insbesondere der Durchfluss (sowohl von der Auswerte- und Steuereinheit als auch vom MUT) überwacht und ausgewertet werden.

Konkret erfolgt damit die Überwachung und Auswertung für Fluidgeschwindigkeiten mit einer stetigen zeitlichen Abhängigkeit und damit Durchflüsse in nur einem Prüfvorgang. Bei der Überwachung und Auswertung mehrerer Hub-Perioden (also Schwingungsdurchläufe) erfolgt insbesondere eine statistische Auswertung, beispielsweise in Gestalt einer Mittelung, über die mehreren Hub-Perioden hinweg. Die Genauigkeit des Aufbaus steigt dabei mit der Wurzel der Zahl von Hub-Perioden hoch minus 1.

Dies ermöglicht eine umfassende Prüfung und/oder Kalibrierung des Durchflussmessers über das gesamte Spektrum der tatsächlich erzeugten Durchflüsse, ohne für jeden vorgesehenen Durchfluss einen eigenen Messdurchlauf vornehmen zu müssen. Dies ermöglicht wiederum eine erhebliche Steigerung der Effizienz bei der Prüfung und/oder Kalibrierung des jeweiligen Durchflussmessers.

Ergänzend oder alternativ dazu sind die Antriebseinheit und die Steuer- und Auswerteinheit bevorzugt dazu ausgebildet, die oszillierende Variation der Höhe der Fluidsäulen in den beiden zumindest anteilig vertikalen Rohrabschnitten und einen entsprechend oszillierenden Durchfluss durch den zumindest anteilig horizontalen Rohrabschnitt mit einer bestimmten, insbesondere einstellbaren, Anregungsfrequenz, zu bewirken.

Durch die ermöglichte Varianz der Anregungsfrequenz könne auf einfache und effiziente Weise das Verhalten des jeweiligen Durchflussmessers bei unterschiedlichen Oszillationsfrequenzen, also der Frequenzgang, ermittelt werden. Dies ist bei den herkömmlichen Einzeldurchläufen nicht möglich, liefert jedoch für den tatsächlichen Einsatz solcher Durchflussmesser wichtige Informationen.

Ferner bevorzugt sind die Antriebseinheit und die Steuer- und Auswerteinheit dazu ausgebildet, die oszillierende Variation der Höhe der Fluidsäulen in den beiden zumindest anteilig vertikalen Rohrabschnitten und damit einen entsprechend oszillierenden Durchfluss durch den zumindest anteilig horizontalen Rohrabschnitt mit der Resonanzfrequenz dieser Bewegung zu bewirken.

Durch die resonante Anregung der Bewegung des Fluids durch die U-Rohr-Anordnung kann auf besonders effiziente Art und Weise das gesamte Potential des Prüf- und/oder Kalibrieraufbaus bezüglich erzeugbarer maximaler Durchflüsse ausgeschöpft werden. Die Möglichkeit der resonant oszillierenden harmonischen Bewegung des Fluids durch die U-Rohr-Anordnung ist ein besonders großer Vorteil des erfindungsgemäßen Aufbaus.

Bevorzugt ist die Steuer- und Auswerteinheit zur Überwachung des Verhaltens des Fluids mit wenigstens einem intrinsischen Sensor gekoppelt, welcher intrinsische Eigenschaften des Fluids in der U-Rohr-Anordnung ermittelt. Insbesondere ist der wenigstens eine intrinsische Sensor dazu ausgebildet, fortlaufend einen statischen Druck des Fluids in einem bestimmten Bereich der U-Rohr-Anordnung und/oder einen Differenzdruck des Fluids zwischen zwei unterschiedlichen Bereichen der U-Rohr-Anordnung zu ermitteln.

Die ermittelten intrinsischen Eigenschaften des Fluids ermöglichen eine zuverlässige und genaue Ermittlung des tatsächlich erzeugten Durchflusses. Der ggf. ermittelte Differenzdruck stellt dabei insbesondere einen Differenzdruck dar, welcher über den jeweiligen Durchflussmesser anliegt.

Bevorzugt ist die Steuer- und Auswerteinheit zur Überwachung des Verhaltens des Fluids mit wenigstens einem extrinsischen Sensor gekoppelt, welcher extrinsische Eigenschaften des Fluids in der U-Rohr-Anordnung ermittelt. Insbesondere ist der wenigstens eine extrinsische Sensor dazu ausgebildet, fortlaufend die Höhe der Fluidsäule in wenigstens einer der beiden zumindest anteilig vertikalen Rohrabschnitte und/oder eine Stellung der Antriebseinheit zu ermitteln. Aus der Höhe und der bekannten Geometrie der U-Rohr-Anordnung wird dann der tatsächliche Durchfluss ermittelt.

Alternativ zu den oben beschriebenen intrinsischen Eigenschaften ermöglichen auch die extrinsischen Eigenschaften eine relativ zuverlässige und genaue Ermittlung des tatsächlich erzeugten Durchflusses. Dabei sind extrinsische Sensoren üblicherweise leichter handzuhaben als intrinsische Sensoren. Eine Kombination von intrinsischen und extrinsischen Sensoren liefert besonders zuverlässige und genaue Ergebnisse bei der Ermittlung des tatsächlich erzeugten Durchflusses.

Bevorzugt umfasst die Antriebseinheit wenigstens eine Verdrängungsvorrichtung, welche dazu ausgebildet ist, das Fluid in wenigstens einem der beiden zumindest anteilig vertikalen Rohrabschnitte zu verdrängen, um das Fluid entlang der U-Rohr-Anordnung zu bewegen.

Eine solche Verdrängungsvorrichtung kann insbesondere mechanischer, hydraulischer und/oder pneumatischer Natur sein und stellt eine besonders einfache und zuverlässige Möglichkeit zur Erzeugung des jeweiligen Durchflusses dar.

Dabei ist die Verdrängungsvorrichtung bevorzugt in Gestalt einer hydraulischen oder pneumatischen Verdrängungsvorrichtung, insbesondere mit einem entlang des jeweiligen zumindest anteilig vertikalen Rohrabschnitts beweglichen Verdrängungskolben, ausgebildet.

Diese konkreten Umsetzungen der Verdrängungsvorrichtung sind sehr robust. Ferner ist insbesondere in einer Ausgestaltung, in welcher die beiden zumindest anteilig vertikalen Rohrabschnitte mit einer solchen Verdrängungsvorrichtung ausgestattet werden, eine Kopplung der beiden Verdrängungsvorrichtungen und damit ein besonders effizienter oszillierende Betrieb dieser beiden Verdrängungsvorrichtungen möglich.

Wie oben bereits angedeutet, umfasst die Antriebseinheit bevorzugt wenigstens eine separate Verdrängungsvorrichtung für jeden der beiden zumindest anteilig vertikalen Rohrabschnitte.

Dies ermöglicht eine besonders kontrollierte und genaue Einstellung des tatsächlich erzeugten Durchflusses durch den zumindest anteilig horizontalen Rohrabschnitt.

Bevorzugt handelt es sich bei dem Fluid um eine Flüssigkeit, welche insbesondere weitestgehend inkompressibel ist. Insbesondere handelt es sich bei dem Fluid um Wasser.

Dies ermöglicht eine besonders genaue Prüfung und Kalibrierung des jeweiligen Durchflussmessers, wobei Wasser vorteilhafterweise eine besonders günstige, frei zugängliche und ungiftige Flüssigkeit ist.

Bevorzugt ist der Prüf- und/oder Kalibrieraufbau als stationärer Prüfstand ausgebildet. Die Nennweite des zumindest anteilig horizontalen Rohrabschnitts liegt insbesondere in einem Bereich von 500 mm bis 3 000 mm. Insbesondere ist der Prüfund/oder Kalibrieraufbau zur Erzeugung eines Durchflusses von bis zu 30 000 m³/h ausgebildet. Die beiden zumindest anteilig vertikalen Rohrabschnitte weisen insbesondere jeweils eine Höhe von 20 bis zu 40 Metern auf.

Es hat sich gezeigt, dass diese konkreten Ausgestaltungen besonders geeignet zur Umsetzung der vorliegenden Erfindung sind, um insbesondere ihr gesamtes Potential für den kaum erschlossenen Bereich der großen Nennweiten und großen Durchflüsse auszuschöpfen.

Bevorzugt ist der Prüf- und/oder Kalibrieraufbau derart ausgebildet, dass in jedem (erlaubten) Betriebszustand der zumindest anteilig horizontale Rohrabschnitt vollständig mit dem Fluid gefüllt ist.

Somit können Fehlmessungen durch den Durchflussmesser vermieden werden. Eine Sicherstellung dieser Anforderung kann beispielsweis mittels einer Überwachung der Höhe der Fluidsäulen in den beiden zumindest anteilig vertikalen Rohrabschnitten und der Sicherstellung einer Mindesthöhe der beiden Fluidsäulen über eine entsprechende Ansteuerung der Antriebseinheit erfolgen. Alternativ dazu kann auch ein Puffertank vorgesehen sein, welcher das Auftreten zu großer Amplituden, bei harmonisch oszillierenden Bewegungen des Fluids im Bereich seiner Resonanzfrequenz und damit eine zumindest teilweise Leerung des zumindest anteilig horizontalen Rohrabschnitts verhindern.

Bevorzugt ist der Prüf- und/oder Kalibrieraufbau dazu ausgebildet, die Prüfung und/oder Kalibrierung des jeweiligen Durchflussmessers über eine Mehrzahl von Bewegungsdurchläufen des Fluids durch den zumindest anteilig horizontalen Rohrabschnitt, insbesondere bei einer bestimmten Anregungsfrequenz, vorzunehmen.

Eine solche Wiederholung des Messdurchlaufs ermöglicht die Steigerung der Genauigkeit der vorgenommenen Prüfung und/oder Kalibrierung.

Insbesondere ist dabei der Prüf- und/oder Kalibrieraufbau dazu ausgebildet, die Prüfung und/oder Kalibrierung des jeweiligen Durchflussmessers mittels unterschiedlicher Bewegungsdurchläufe bei verschiedenen Anregungsfrequenzen vorzunehmen.

Eine derartige Variation der Anregungsfrequenzen erlaubt eine besonders umfassende und zuverlässige Prüfung und/oder Kalibrierung.

Erfindungsgemäß umfasst ein Verfahren zur Prüfung und/oder Kalibrierung eines Durchflussmessers, insbesondere mit einem oben beschriebenen Prüf- und/oder Kalibrieraufbau, die folgenden Schritte:
- Erzeugung einer harmonisch oszillierenden Bewegung eines Fluids durch eine im Wesentlichen vertikal ausgerichtete U-Rohr-Anordnung mit einem zumindest anteilig horizontalen Rohrabschnitt und zwei zumindest anteilig vertikalen Rohrabschnitten;
- Ermittlung des dabei tatsächlich erzeugten Durchflusses durch den zumindest anteilig horizontalen Rohrabschnitt;
- Abgleich des ermittelten, tatsächlichen Durchflusses mit dem durch einen am zumindest anteilig horizontalen Rohrabschnitt vorgesehenen Durchflussmesser gemessenen Durchfluss und/oder Kalibrierung eines am zumindest anteilig horizontalen Rohrabschnitt vorgesehenen Durchflussmessers anhand des ermittelten tatsächlichen Durchflusses.

Die Ermittlung des tatsächlich erzeugten Durchflusses kann dabei unter Berücksichtigung der zur Erzeugung der Bewegung des Fluids vorgenommenen Handlungen und/oder unter Zuhilfenahme von Sensoren, welche sich jedoch von dem zu prüfenden und/oder kalibrierenden Durchflussmesser unterscheiden, erfolgen.

Ein solches Verfahren erlaubt eine besonders zuverlässige und genaue Prüfung und/oder Kalibrierung des jeweiligen Durchflussmessers, wie bereits zuvor unter Bezug auf einen entsprechenden Prüf- und/oder Kalibrieraufbau dargelegt wurde.

Bevorzugt umfasst das Verfahren ferner den Austausch des zumindest anteilig horizontalen Rohrabschnitts durch einen zumindest anteilig horizontalen Rohrabschnitt mit einem anderen Innendurchmesser und die Wiederholung der zuvor genannten Verfahrensschritte.

Dies ermöglicht eine vergleichsweise einfache und effiziente noch umfassendere Prüfung und/oder Kalibrierung des jeweiligen Durchflussmessers.

Nachfolgend wird die Erfindung rein beispielhaft unter Bezugnahme auf eine Zeichnung beschrieben. Dabei zeigt:

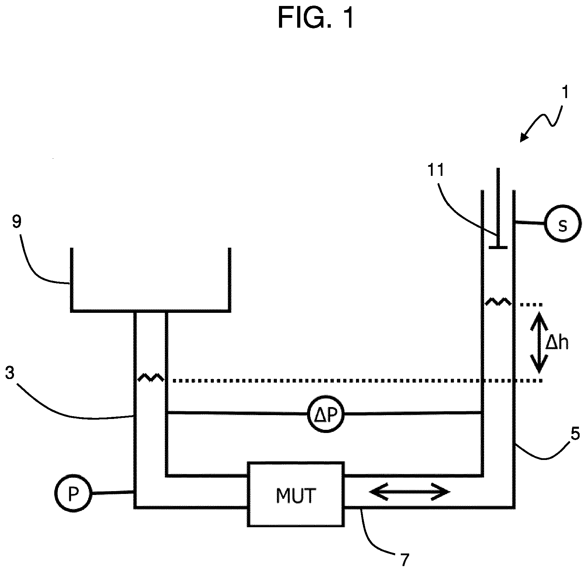

- FIG. 1: schematisch einen Prüf- und/oder Kalibrieraufbau gemäß einem Ausführungsbeispiel der vorliegenden Erfindung.

Konkret zeigt FIG. 1 schematisch einen Prüf- und/oder Kalibrieraufbau 1 mit einer U-Rohr-Anordnung aus zwei vertikalen Rohrabschnitten 3 und 5 sowie einem horizontalen Rohrabschnitt 7. Der horizontale Rohrabschnitt 7 weist einen Prüf- und/oder Kalibrierbereich auf, in welchem der zu prüfende bzw. zu kalibrierende Durchflussmesser MUT ("Meter Under Test"), insbesondere in Gestalt eines Ultraschall-Durchflussmessers, vorgesehen ist.

Der horizontale Rohrabschnitt 7 ist gänzlich und die beiden vertikalen Rohrabschnitte 3 und 5 sind jeweils bis zu einer bestimmten Höhe mit Fluid gefüllt, wie durch die schematischen Wellen in den beiden vertikalen Rohrabschnitten 3 und 5 angedeutet ist.

Im gezeigten Ausführungsbeispiel mündet der linke vertikale Rohrabschnitt 3 an seinem oberen Ende in einen Puffertank 9, während in dem rechten vertikalen Rohrabschnitt 5 ein Verdrängungskolben vorgesehen und mit einem entsprechenden Antrieb (nicht gezeigt) gekoppelt ist.

Der besagte Verdrängungskolben bildet zusammen mit seinem Antrieb eine Verdrängungsvorrichtung einer Antriebseinheit 11 des Prüf- und/oder Kalibrieraufbaus. Die besagte Antriebseinheit 11 ist dabei mit einer Steuer- und Auswerteinheit (nicht gezeigt) gekoppelt.

Ferner umfasst der hier gezeigte Prüf- und/oder Kalibrieraufbau 1 einen extrinsischen Sensor in Gestalt eines Füllstands-Sensors S zur Ermittlung des Füllstandes des rechten vertikalen Rohrabschnitts 5 und zwei intrinsische Sensoren in Gestalt eines Absolutwert-Drucksensors P und eines Differenzwert-Drucksensors ΔP. All diese und ggf. noch weitere nicht dargestellte Sensoren sind mit der Steuerund Auswerteinheit gekoppelt, um diese mit Messwerten zu versorgen, welche es der Steuer- und Auswerteinheit ermöglichen, das Verhalten des Fluids in der U-Rohr-Anordnung zu überwachen und somit einen tatsächlich erzeugten Durchfluss durch den zumindest anteilig horizontalen Rohrabschnitt und damit durch den jeweiligen Durchflussmesser MUT zu ermitteln.

Im Folgenden wird eine beispielhafte Verwendung des gezeigten Prüf- und/oder Kalibrieraufbaus 1 beschrieben.

Zur Erzeugung einer harmonisch oszillierenden Bewegung des Fluids in der U-Rohr-Anordnung übt der Antrieb einen zeitlich abhängigen Druck periodisch auf die Fluidsäule aus, so dass sich die Fluidsäule mit einer bestimmten Anregungsfrequenz gleichmäßig auf und ab bewegt. Dies führt zu einer Hin- und Her-Bewegung zumindest eines Teils des Fluids zwischen den beiden vertikalen Rohrabschnitten 3 und 5 und dabei durch den horizontalen Rohrabschnitt 7 und den vorgesehenen Durchflussmesser MUT bzw. an diesem vorbei. Dabei resultiert eine Höhendifferenz Δh zwischen den Fluidsäulen in den beiden vertikalen Rohrabschnitten 3 und 5 zu einer gravitatorischen Rückstellkraft und ermöglicht eine besonders effiziente Aufrechterhaltung der erzeugten harmonischen Schwingung des Fluids, insbesondere wenn die ausgewählte Anregungsfrequenz nahe oder gleich der Resonanzfrequenz der Bewegung des Fluids durch die U-Rohr-Anordnung ist. Der Puffertank 9 dient dabei dazu, die maximale Amplitude der erzeugten Schwingung des Fluids zu beschränken und damit eine auch nur teilweise Leerung des horizontalen Rohrabschnitts 7 von dem Fluid zu vermeiden.

Über Signale der vorgesehenen Sensoren S, P und ΔP sowie gegebenenfalls weiterer nicht gezeigter Sensoren und/oder aus Steuersignalen an die Antriebseinheit 11, ermittelt die Steuer- und Auswerteinheit den tatsächlich erzeugten Durchfluss, und zwar jeweils über die gesamten Hub-Perioden hinweg.

Zur Prüfung des vorgesehenen Durchflussmessers MUT misst auch dieser unabhängig von dem durch die Steuer- und Auswerteinheit ermittelten tatsächlich erzeugten Durchfluss den Durchfluss durch den horizontalen Rohrabschnitt 7. Schließlich erfolgt, insbesondere durch die Steuer- und Auswerteinheit, ein Abgleich des ermittelten tatsächlichen Durchflusses mit dem durch den Durchflussmesser MUT gemessenen Durchfluss, um die Funktion des Durchflussmessers MUT zu bewerten.

Ergänzend oder alternativ dazu kann der vorgesehene Durchflussmesser MUT anhand des ermittelten tatsächlichen Durchflusses kalibriert werden, sodass der Durchflussmesser MUT jeweils dem tatsächlichen Durchfluss entsprechende Messwerte für den Durchfluss ausgibt.

Dies kann für unterschiedliche Anregungsfrequenzen und bei einem Austausch des jeweiligen horizontalen Rohrabschnitts 7 für unterschiedliche Innendurchmesser erfolgen. Folglich ist eine Prüfung und/oder Kalibrierung für unterschiedlichste Nennweiten des horizontalen Rohrabschnitts 7, Durchflüsse und Frequenzen möglich.

Schließlich sei darauf hingewiesen, dass der Schutzbereich der nachfolgenden Ansprüche nicht durch das obige Ausführungsbeispiel beschränkt werden soll, sondern auch Modifikationen des beschriebenen Ausführungsbeispiel umfasst.

Beispielsweise können die vertikalen Rohrabschnitte 3 und 5 jeweils um bestimmten Winkel aus der Vertikalen herausgeneigt sein, andere und/oder weitere Sensoren (ggf. auch in Gestalt eines bereits kalibrierten Durchflussmessers) zur Ermittlung des tatsächlichen Durchflusses und/oder anders ausgestaltete Antriebseinheiten vorgesehen werden.

Beispielsweise kann der Antrieb als Druckluftpolster, peristaltisch oder magnetisch (Ferrofluid) ausgeführt werden, um die Fluidsäule in Bewegung zu setzen.

### Bezugszeichenliste

- 1: Prüf- und/oder Kalibrieraufbau
- 3: (linker) vertikaler Rohrabschnitt
- 5: (rechter) vertikaler Rohrabschnitt
- 7: horizontaler Rohrabschnitt
- 9: Puffertank
- 11: Antriebseinheit

- Δh: Höhendifferenz
- MUT: "Meter-Under-Test"/ Durchflussmesser
- P: Absolutwert-Drucksensor
- ΔP: Differenzwert-Drucksensor
- S: Füllstands-Sensor

## Patentansprüche

1. Prüf- und/oder Kalibrieraufbau (1) für Durchflussmesser (MUT), insbesondere für Ultraschall-Durchflussmesser, wobei der Prüf- und/oder Kalibrieraufbau (1) umfasst:
eine U-Rohr-Anordnung mit zwei zumindest anteilig vertikalen Rohrabschnitten (3, 5) und einem zumindest anteilig horizontalen Rohrabschnitt (7), welcher die beiden zumindest anteilig vertikalen Rohrabschnitte (3, 5), insbesondere in ihrem unteren Bereich, miteinander verbindet;
ein Fluid, welches den zumindest anteilig horizontalen Rohrabschnitt (7) ausfüllt und in die beiden zumindest anteilig vertikalen Rohrabschnitte (3, 5) hinaufragt, um dort Fluidsäulen zu bilden;
eine Antriebseinheit (11), welche dazu ausgebildet ist, das Fluid entlang der U-Rohr-Anordnung zu bewegen, sodass es zu einem Volumenstrom von Fluid durch den zumindest anteilig horizontalen Rohrabschnitt (7) und gleichzeitig zu einer Variation der Höhe der beiden Fluidsäulen in den beiden zumindest anteilig vertikalen Rohrabschnitten (3, 5) kommt;
und
eine Steuer- und Auswerteinheit, welche dazu ausgebildet ist, die Antriebseinheit (11) zu steuern und das Verhalten des Fluids zu überwachen, um daraus einen tatsächlich erzeugten Durchfluss durch den zumindest anteilig horizontalen Rohrabschnitt (7) zu ermitteln;
wobei der zumindest anteilig horizontale Rohrabschnitt (7) einen Prüfund/oder Kalibrierbereich aufweist, in welchem der zu prüfende und/oder kalibrierende Durchflussmesser (MUT) vorgesehen werden kann, um einen Durchfluss durch den zumindest anteilig horizontalen Rohrabschnitt (7) zu messen,
wobei die Steuer- und Auswerteinheit mit dem jeweils zu prüfenden und/oder kalibrierenden Durchflussmesser (MUT) koppelbar und dazu ausgebildet ist, den von dem Durchflussmesser (MUT) gemessenen Durchfluss mit dem tatsächlich erzeugten Durchfluss zu vergleichen und ein entsprechendes Ergebnis auszugeben und/oder den Durchflussmesser (MUT) anhand des tatsächlich erzeugten Durchflusses, insbesondere automatisch, zu kalibrieren,
**dadurch gekennzeichnet, dass**
die Antriebseinheit (11) und die Steuer- und Auswerteinheit dazu ausgebildet sind, eine oszillierende, insbesondere eine harmonisch oszillierende, Variation der Höhe der Fluidsäulen in den beiden zumindest anteilig vertikalen Rohrabschnitten (3, 5) und damit einen entsprechend oszillierenden Durchfluss durch den zumindest anteilig horizontalen Rohrabschnitt (7) zu bewirken.

2. Prüf- und/oder Kalibrieraufbau (1) nach Anspruch 1,
wobei die Steuer- und Auswerteinheit dazu ausgebildet ist, das Verhalten des Fluids über wenigstens eine halbe Hub-Periode, insbesondere über mehrere - bevorzugt aufeinander folgende - Hub-Perioden, hinweg zu überwachen und auszuwerten.

3. Prüf- und/oder Kalibieraufbau (1) nach Anspruch 1 oder 2,
wobei die Antriebseinheit (11) und die Steuer- und Auswerteinheit dazu ausgebildet sind, die oszillierende Variation der Höhe der Fluidsäulen in den beiden zumindest anteilig vertikalen Rohrabschnitten (3, 5) und damit einen entsprechend oszillierenden Durchfluss durch den zumindest anteilig horizontalen Rohrabschnitt (7) mit einer vorbestimmten, insbesondere einstellbaren, Anregungsfrequenz, zu bewirken.

4. Prüf- und/oder Kalibieraufbau (1) nach Anspruch 3,
wobei die Antriebseinheit (11) und die Steuer- und Auswerteinheit dazu ausgebildet sind, die oszillierende Variation der Höhe der Fluidsäulen in den beiden zumindest anteilig vertikalen Rohrabschnitten (3, 5) und damit einen entsprechend oszillierenden Durchfluss durch den zumindest anteilig horizontalen Rohrabschnitt (7) mit der Resonanzfrequenz dieser Bewegung zu bewirken.

5. Prüf- und/oder Kalibieraufbau (1) nach einem der vorstehenden Ansprüche, wobei die Steuer- und Auswerteinheit zur Überwachung des Verhaltens des Fluids mit wenigstens einem intrinsischen Sensor (P, ΔP) gekoppelt ist, welcher intrinsische Eigenschaften des Fluids in der U-Rohr-Anordnung ermittelt,
wobei der wenigstens eine intrinsische Sensor (P, ΔP) insbesondere dazu ausgebildet ist, fortlaufend einen statischen Druck des Fluids in einem vorbestimmten Bereich der U-Rohr-Anordnung und/oder einen Differenzdruck des Fluids zwischen zwei unterschiedlichen Bereichen der U-Rohr-Anordnung zu ermitteln.

6. Prüf- und/oder Kalibieraufbau (1) nach einem der vorstehenden Ansprüche, wobei die Steuer- und Auswerteinheit zur Überwachung des Verhaltens des Fluids mit wenigstens einem extrinsischen Sensor (S) gekoppelt ist, welcher extrinsische Eigenschaften des Fluids in der U-Rohr-Anordnung ermittelt, wobei der wenigstens eine extrinsische Sensor (S) insbesondere dazu ausgebildet ist, fortlaufend die Höhe der Fluidsäule in wenigstens einer der beiden zumindest anteilig vertikalen Rohrabschnitte (3, 5) und/oder eine Stellung der Antriebseinheit (11) zu ermitteln.

7. Prüf- und/oder Kalibieraufbau (1) nach einem der vorstehenden Ansprüche, wobei die Antriebseinheit (11) wenigstens eine Verdrängungsvorrichtung umfasst, welche dazu ausgebildet ist, das Fluid in wenigstens einem der beiden zumindest anteilig vertikalen Rohrabschnitte (3, 5) zu verdrängen, um das Fluid entlang der U-Rohr-Anordnung zu bewegen.

8. Prüf- und/oder Kalibieraufbau (1) nach Anspruch 7,
wobei die Verdrängungsvorrichtung in Gestalt einer hydraulischen oder pneumatischen Verdrängungsvorrichtung, insbesondere mit einem entlang des jeweiligen zumindest anteilig vertikalen Rohrabschnitts beweglichen Verdrängungskolben, ausgebildet ist.

9. Prüf- und/oder Kalibieraufbau (1) nach einem der Ansprüche 7 und 8, wobei die Antriebseinheit (11) wenigstens eine separate Verdrängungsvorrichtung für jeden der beiden zumindest anteilig vertikalen Rohrabschnitte (3, 5) umfasst.

10. Prüf- und/oder Kalibieraufbau (1) nach einem der vorstehenden Ansprüche, wobei es sich bei dem Fluid um eine Flüssigkeit handelt, welche insbesondere weitestgehend inkompressibel ist,
wobei es sich bei dem Fluid insbesondere um Wasser handelt.

11. Prüf- und/oder Kalibrieraufbau (1) nach einem der vorstehenden Ansprüche,
wobei der Prüf- und/oder Kalibrieraufbau (1) als stationärer Prüfstand ausgebildet ist,
wobei die Nennweite des zumindest anteilig horizontalen Rohrabschnitts insbesondere in einem Bereich von 500 mm bis 3 000 mm liegt,
wobei der Prüf- und/oder Kalibrieraufbau (1) insbesondere zur Erzeugung eines Durchflusses von bis zu 30 000 m³/h ausgebildet ist,
wobei die beiden zumindest anteilig vertikalen Rohrabschnitte (3, 5) insbesondere jeweils eine Höhe von 20 bis zu 40 Metern aufweisen.

12. Prüf- und/oder Kalibieraufbau (1) nach einem der vorstehenden Ansprüche, wobei der Prüf- und/oder Kalibrieraufbau (1) derart ausgebildet ist, dass in jedem erlaubten Betriebszustand der im Wesentliche horizontale Rohrabschnitt (7) vollständig mit dem Fluid gefüllt ist.

13. Prüf- und/oder Kalibieraufbau (1) nach einem der vorstehenden Ansprüche, wobei der Prüf- und/oder Kalibrieraufbau (1) dazu ausgebildet ist, die Prüfung und/oder Kalibrierung des jeweiligen Durchflussmessers (MUT) über eine Mehrzahl von Bewegungsdurchläufen des Fluids durch den zumindest anteilig horizontalen Rohrabschnitt (7), insbesondere bei einer vorbestimmten Anregungsfrequenz, vorzunehmen.

14. Verfahren zur Prüfung und/oder Kalibrierung eines Durchflussmessers (MUT), insbesondere mit einem Prüf- und/oder Kalibrieraufbau (1) nach einem der vorstehenden Ansprüche, wobei das Verfahren die folgenden Schritte umfasst:
Erzeugung einer harmonisch oszillierenden Bewegung eines Fluids durch eine zumindest anteilig vertikal ausgerichtete U-Rohr-Anordnung mit einem zumindest anteilig horizontalen Rohrabschnitt (7) und zwei zumindest anteilig vertikalen Rohrabschnitten (3, 5);
Ermittlung des dabei erzeugten tatsächlichen Durchflusses durch den zumindest anteilig horizontalen Rohrabschnitt (7);
Abgleich des ermittelten tatsächlichen Durchflusses mit dem durch einen am zumindest anteilig horizontalen Rohrabschnitt (7) vorgesehenen Durchflussmesser (MUT) gemessenen Durchflusses und/oder Kalibrierung eines am zumindest anteilig horizontalen Rohrabschnitt (7) vorgesehenen Durchflussmessers (MUT) anhand des ermittelten tatsächlichen Durchflusses.

## Claims

1. A test and/or calibration assembly (1) for flowmeters (MUT), in particular for ultrasonic flowmeters, wherein the test and/or calibration assembly (1) comprises:
a U-pipe arrangement having two at least proportionally vertical pipe sections (3, 5) and one at least proportionally horizontal pipe section (7) which connects the two at least proportionally vertical pipe sections (3, 5) to one another, in particular in their lower region;
a fluid which fills the at least proportionally horizontal pipe section (7) and projects into the two at least proportionally vertical pipe sections (3, 5) to form fluid columns there;
a drive unit (11) which is configured to move the fluid along the U-pipe arrangement so that a volume flow of fluid through the at least proportionally horizontal pipe section (7) and, at the same time, a variation in the height of the two fluid columns in the two at least proportionally vertical pipe sections (3, 5) take place;
and
a control and evaluation unit which is configured to control the drive unit (11) and to monitor the behavior of the fluid in order to determine an actually generated flow through the at least proportionally horizontal pipe section (7) therefrom;
wherein the at least proportionally horizontal pipe section (7) has a test and/or calibration region in which the flowmeter (MUT) to be tested and/or calibrated can be provided to measure a flow through the at least proportionally horizontal pipe section (7),
wherein the control and evaluation unit can be coupled to the respective flowmeter (MUT) to be tested and/or calibrated and is configured to compare the flow measured by the flowmeter (MUT) with the actually generated flow and to output a corresponding result and/or to calibrate, in particular automatically, the flowmeter (MUT) based on the actually generated flow,
**characterized in that**
the drive unit (11) and the control and evaluation unit are configured to effect an oscillating variation, in particular a harmonically oscillating variation, in the height of the fluid columns in the two at least proportionally vertical pipe sections (3, 5) and thus a correspondingly oscillating flow through the at least proportionally horizontal pipe section (7).

2. A test and/or calibration assembly (1) according to claim 1,
wherein the control and evaluation unit is configured to monitor and evaluate the behavior of the fluid over at least half a stroke period, in particular over a plurality of - preferably consecutive - stroke periods.

3. A test and/or calibration assembly (1) according to claim 1 or 2,
wherein the drive unit (11) and the control and evaluation unit are configured to effect the oscillating variation in the height of the fluid columns in the two at least proportionally vertical pipe sections (3, 5) and thus a correspondingly oscillating flow through the at least proportionally horizontal pipe section (7) at a predetermined, in particular settable, excitation frequency.

4. A test and/or calibration assembly (1) according to claim 3,
wherein the drive unit (11) and the control and evaluation unit are configured to effect the oscillating variation in the height of the fluid columns in the two at least proportionally vertical pipe sections (3, 5) and thus a correspondingly oscillating flow through the at least proportionally horizontal pipe section (7) at the resonant frequency of this movement.

5. A test and/or calibration assembly (1) according to any one of the preceding claims,
wherein the control and evaluation unit for monitoring the behavior of the fluid is coupled to at least one intrinsic sensor (P, ΔP) which determines intrinsic properties of the fluid in the U-pipe arrangement,
wherein the at least one intrinsic sensor (P, ΔP) is in particular configured to continuously determine a static pressure of the fluid in a predetermined region of the U-pipe arrangement and/or a differential pressure of the fluid between two different regions of the U-pipe arrangement.

6. A test and/or calibration assembly (1) according to any one of the preceding claims,
wherein the control and evaluation unit for monitoring the behavior of the fluid is coupled to at least one extrinsic sensor (S) which determines extrinsic properties of the fluid in the U-pipe arrangement,
wherein the at least one extrinsic sensor (S) is in particular configured to continuously determine the height of the fluid column in at least one of the two at least proportionally vertical pipe sections (3, 5) and/or a position of the drive unit (11).

7. A test and/or calibration assembly (1) according to any one of the preceding claims,
wherein the drive unit (11) comprises at least one displacement apparatus which is configured to displace the fluid in at least one of the two at least proportionally vertical pipe sections (3, 5) in order to move the fluid along the U-pipe arrangement.

8. A test and/or calibration assembly (1) according to claim 7,
wherein the displacement apparatus is designed in the form of a hydraulic or pneumatic displacement apparatus, in particular having a displacement piston movable along the respective at least proportionally vertical pipe section.

9. A test and/or calibration assembly (1) according to one of the claims 7 and 8,
wherein the drive unit (11) comprises at least one separate displacement apparatus for each of the two at least proportionally vertical pipe sections (3, 5).

10. A test and/or calibration assembly (1) according to any one of the preceding claims,
wherein the fluid is a liquid which is in particular largely incompressible, wherein the fluid is in particular water.

11. A test and/or calibration assembly (1) according to any one of the preceding claims,
wherein the test and/or calibration assembly (1) is configured as a stationary test stand,
wherein the nominal width of the at least proportionally horizontal pipe section is in particular in a range from 500 mm to 3000 mm,
wherein the test and/or calibration assembly (1) is in particular configured to generate a flow rate of up to 30,000 m³/h,
wherein the two at least proportionally vertical pipe sections (3, 5) each have a height of 20 to 40 meters.

12. A test and/or calibration assembly (1) according to any one of the preceding claims,
wherein the test and/or calibration assembly (1) is configured such that the substantially horizontal pipe section (7) is completely filled with the fluid in every permitted operating state.

13. A test and/or calibration assembly (1) according to any one of the preceding claims,
wherein the test and/or calibration assembly (1) is configured to perform the testing and/or calibration of the respective flowmeter (MUT) over a plurality of movement sequences of the fluid through the at least proportionally horizontal pipe section (7), in particular at a predetermined excitation frequency.

14. A method for testing and/or calibrating a flowmeter (MUT), in particular using a test and/or calibration assembly (1) according to any one of the preceding claims, wherein the method comprises the following steps:
generating a harmonically oscillating movement of a fluid through an at least proportionally vertically oriented U-pipe arrangement having an at least proportionally horizontal pipe section (7) and two at least proportionally vertical pipe sections (3, 5);
determining the actual flow through the at least proportionally horizontal pipe section (7) that is generated in this respect;
comparing the determined actual flow with the flow measured by a flowmeter (MUT) provided at the at least proportionally horizontal pipe section (7) and/or calibrating a flowmeter (MUT) provided at the at least proportionally horizontal pipe section (7) based on the determined actual flow.

## Revendications

1. Ensemble de test et/ou d'étalonnage (1) pour débitmètres (MUT), en particulier pour débitmètres à ultrasons, l'ensemble de test et/ou d'étalonnage (1) comprenant :
un agencement de tube en U ayant deux tronçons de tube (3, 5) au moins en partie verticaux et un tronçon de tube (7) au moins en partie horizontal qui relie entre eux les deux tronçons de tube (3, 5) au moins en partie verticaux, en particulier dans leur zone inférieure ;
un fluide qui remplit le tronçon de tube (7) au moins en partie horizontal et qui remonte dans les deux tronçons de tube (3, 5) au moins en partie verticaux pour y former des colonnes de fluide ;
une unité d'entraînement (11) conçue pour déplacer le fluide le long de l'agencement de tube en U, de sorte qu'il en résulte un écoulement volumétrique de fluide à travers le tronçon de tube (7) au moins en partie horizontal et simultanément une variation de la hauteur des deux colonnes de fluide dans les deux tronçons de tube (3, 5) au moins en partie verticaux ;
et
une unité de commande et d'évaluation conçue pour commander l'unité d'entraînement (11) et pour surveiller le comportement du fluide afin d'en déterminer un débit effectivement généré à travers le tronçon de tube (7) au moins en partie horizontal ;
le tronçon de tuyau (7) au moins en partie horizontal présentant une zone de test et/ou d'étalonnage dans laquelle le débitmètre (MUT) à tester et/ou à étalonner peut être prévu pour mesurer un débit à travers le tronçon de tube (7) au moins en partie horizontal,
l'unité de commande et d'évaluation pouvant être couplée au débitmètre (MUT) respectif à tester et/ou à étalonner et étant conçue pour comparer le débit mesuré par le débitmètre (MUT) avec le débit effectivement généré et pour émettre un résultat correspondant et/ou pour étalonner le débitmètre (MUT), en particulier automatiquement, à l'aide du débit effectivement généré,
**caractérisé en ce que**
l'unité d'entraînement (11) et l'unité de commande et d'évaluation sont conçues pour provoquer une variation oscillante, en particulier une variation oscillante harmonique, de la hauteur des colonnes de fluide dans les deux tronçons de tube (3, 5) au moins en partie verticaux et donc un débit oscillant correspondant à travers le tronçon de tube (7) au moins en partie horizontal.

2. Ensemble de test et/ou d'étalonnage (1) selon la revendication 1, dans lequel l'unité de commande et d'évaluation est conçue pour surveiller et évaluer le comportement du fluide sur au moins une demi-période de course, en particulier sur plusieurs périodes de course - de préférence successives.

3. Ensemble de test et/ou d'étalonnage (1) selon la revendication 1 ou 2, dans lequel l'unité d'entraînement (11) et l'unité de commande et d'évaluation sont conçues pour provoquer la variation oscillante de la hauteur des colonnes de fluide dans les deux tronçons de tube (3, 5) au moins en partie verticaux et donc un débit oscillant correspondant à travers le tronçon de tube (7) au moins en partie horizontal avec une fréquence d'excitation prédéterminée, en particulier réglable.

4. Ensemble de test et/ou d'étalonnage (1) selon la revendication 3, dans lequel l'unité d'entraînement (11) et l'unité de commande et d'évaluation sont conçues pour provoquer la variation oscillante de la hauteur des colonnes de fluide dans les deux tronçons de tube (3, 5) au moins en partie verticaux et donc un débit oscillant correspondant à travers le tronçon de tube (7) au moins en partie horizontal avec la fréquence de résonance de ce mouvement.

5. Ensemble de test et/ou d'étalonnage (1) selon l'une des revendications précédentes,
dans lequel l'unité de commande et d'évaluation destinée à surveiller le comportement du fluide est couplée à au moins un capteur intrinsèque (P, ΔP) qui détermine des propriétés intrinsèques du fluide dans l'agencement de tube en U,
ledit au moins un capteur intrinsèque (P, ΔP) est en particulier conçu pour déterminer en continu une pression statique du fluide dans une zone prédéterminée de l'agencement de tube en U et/ou une pression différentielle du fluide entre deux zones différentes de l'agencement de tube en U.

6. Ensemble de test et/ou d'étalonnage (1) selon l'une des revendications précédentes,
dans lequel l'unité de commande et d'évaluation destinée à surveiller le comportement du fluide est couplée à au moins un capteur extrinsèque (S) qui détermine des propriétés extrinsèques du fluide dans l'agencement de tube en U,
ledit au moins un capteur extrinsèque (S) est en particulier conçu pour déterminer en continu la hauteur de la colonne de fluide dans l'un au moins des deux tronçons de tube (3, 5) au moins en partie verticaux et/ou une position de l'unité d'entraînement (11).

7. Ensemble de test et/ou d'étalonnage (1) selon l'une des revendications précédentes,
dans lequel l'unité d'entraînement (11) comprend au moins un dispositif de refoulement conçu pour refouler le fluide dans l'un au moins des deux tronçons de tube (3, 5) au moins en partie verticaux, afin de déplacer le fluide le long de l'agencement de tube en U.

8. Ensemble de test et/ou d'étalonnage (1) selon la revendication 7,
dans lequel le dispositif de refoulement est réalisé sous la forme d'un dispositif de refoulement hydraulique ou pneumatique comprenant en particulier un piston de refoulement mobile le long du tronçon de tube respectif au moins en partie vertical.

9. Ensemble de test et/ou d'étalonnage (1) selon l'une des revendications 7 et 8,
dans lequel l'unité d'entraînement (11) comprend au moins un dispositif de refoulement séparé pour chacun des deux tronçons de tube (3, 5) au moins en partie verticaux.

10. Ensemble de test et/ou d'étalonnage (1) selon l'une des revendications précédentes,
dans lequel le fluide est un liquide qui est en particulier largement incompressible,
le fluide est en particulier de l'eau.

11. Ensemble de test et/ou d'étalonnage (1) selon l'une des revendications précédentes,
dans lequel l'ensemble de test et/ou d'étalonnage (1) est conçu comme un banc d'essai stationnaire,
le diamètre nominal du tronçon de tube au moins en partie horizontal est en particulier compris dans une plage de 500 mm à 3 000 mm,
l'ensemble de test et/ou d'étalonnage (1) est conçu en particulier pour générer un débit allant jusqu'à 30 000 m³/h,
les deux tronçons de tube (3, 5) au moins en partie verticaux présentent en particulier chacun une hauteur de 20 à 40 mètres.

12. Ensemble de test et/ou d'étalonnage (1) selon l'une des revendications précédentes,
dans lequel l'ensemble de test et/ou d'étalonnage (1) est conçu de telle sorte que, dans chaque état de fonctionnement autorisé, le tronçon de tube (7) sensiblement horizontal est complètement rempli de fluide.

13. Ensemble de test et/ou d'étalonnage (1) selon l'une des revendications précédentes,
dans lequel l'ensemble de test et/ou d'étalonnage (1) est conçu pour effectuer le test et/ou l'étalonnage du débitmètre respectif (MUT) sur une pluralité de cycles de passage du fluide à travers le tronçon de tube (7) au moins en partie horizontal, en particulier à une fréquence d'excitation prédéterminée.

14. Procédé de test et/ou d'étalonnage d'un débitmètre (MUT), en particulier avec un ensemble de test et/ou d'étalonnage (1) selon l'une des revendications précédentes, le procédé comprenant les étapes suivantes consistant à :
générer un mouvement oscillant harmonique d'un fluide à travers un agencement de tube en U orienté au moins en partie verticalement, ayant un tronçon de tube (7) au moins en partie horizontal et deux tronçons de tube (3, 5) au moins en partie verticaux ;
déterminer le débit effectif ainsi généré à travers le tronçon de tube (7) au moins en partie horizontal ;
comparer le débit effectif déterminé avec le débit mesuré par un débitmètre (MUT) prévu sur le tronçon de tube (7) au moins en partie horizontal, et/ou étalonner un débitmètre (MUT) prévu sur le tronçon de tube (7) au moins en partie horizontal à l'aide du débit effectif déterminé.
